# EUROPEAN PATENT APPLICATION

(11) **EP 4 835 411 A1**
(43) Date of publication of application: **04.11.2026**
(21) Application number: 24912655.8
(22) Date of filing: 20.12.2024
(51) Int. Cl.: G01F 3/22, G01F 1/00

(54) **DUST COLLECTION ADAPTER**

(30) Priority: 25.12.2023 JP 2023218315
(71) Applicant: Panasonic Intellectual Property Management Co., Ltd., Kadoma-shi, Osaka 571-0057 (JP)
(72) Inventor: FUKUI, Hiroto, Osaka 571-0057 (JP); OKAMOTO, Sohei, Osaka 571-0057 (JP); HAO, Yichun, Osaka 571-0057 (JP)
(74) Representative: SSM Sandmair
(86) International application number: PCT/JP2024/045135
(87) International publication number: WO 2025/142766

(57) **Abstract**

The present disclosure provides a dust collection adapter that can efficiently collect dust in gas with a simple configuration without causing pressure loss. A dust collection adapter of the present disclosure is a dust collection adapter, disposed inside a gas meter housing, for collecting dust in gas, and includes a shut-off valve mounting joint having one end connected to an inlet side gas passage, an outlet opening provided at another end of the shut-off valve mounting joint and opening to an interior of the housing, and a collision wall facing the outlet opening.

## Description

### Technical Field

The present disclosure relates to a dust collection adapter to be attached to the inlet of a gas meter.

### Background Art

Patent Literature 1 discloses a dust collection filter including a steel housing assembly, a valve, a passage housing, a baffle plate, a cover plate, and a passage cover, in which the baffle plate is disposed in a channel housing and a filter mesh is formed on the baffle plate.

### Citation List

### Patent Literature

Patent Literature 1: Chinese Utility Model Registration No. 214702382

### Summary of Invention

### Technical Problem

The present disclosure provides a dust collection adapter that can efficiently collect dust in gas with a simple configuration without causing pressure loss.

### Solution to Problem

A dust collection adapter of the present disclosure is a dust collection adapter, disposed inside a gas meter housing, for collecting dust in gas, and includes a shut-off valve mounting joint having one end connected to an inlet side gas passage, an outlet opening provided at another end of the shut-off valve mounting joint and opening to an interior of the housing, and a collision wall facing the outlet opening.

This specification includes the entire contents of Japanese Patent Application No. 2023-218315, filed in Japan on December 25, 2023.

### Advantageous Effects of Invention

According to the present disclosure, gas having flowed into the shut-off valve mounting joint collides with the collision wall when it flows out through the outlet opening, causing dust mixed in the gas to fall downward and accumulate on the interior bottom surface of the housing. As a result, dust contained in the gas can be collected inside the housing with a simple configuration.

### Brief Description of Drawings

[Fig. 1] Fig. 1 is a schematic diagram showing a gas meter incorporating a dust collection adapter according to a first embodiment.
[Fig. 2] Fig. 2 is a front view of the dust collection adapter according to the first embodiment.
[Fig. 3] Fig. 3 is a side view of the dust collection adapter according to the first embodiment.
[Fig. 4] Fig. 4 is a perspective view of the dust collection adapter according to the first embodiment.
[Fig. 5] Fig. 5 is a vertical cross-sectional view of the dust collection adapter according to the first embodiment.

### Description of Embodiments

(Knowledge etc. on which the present disclosure is based)
Gas meters are required to pass a predetermined dust test. This is because it is assumed that dust is contained in the gas that is the fluid to be measured. To pass the dust test, gas meters are equipped with a dust collection filter to remove dust. Conventional dust collection filters include a dust collection filter including a steel housing assembly, a valve, a passage housing, a baffle plate, a cover plate, and a passage cover, in which the baffle plate is disposed in a channel housing and a filter mesh is formed on the baffle plate.

However, in the conventional technique, the dust collection adapter is configured with multiple parts of different shapes and sizes, resulting in an increased number of parts and higher manufacturing costs. The inventors also have discovered a problem in that the baffle plate has numerous small holes that form the filter mesh, which increases the pressure loss of the gas flowing through the dust collection adapter. In order to solve this problem, the inventors have devised the subject matter of the present disclosure.

Then, the present disclosure provides a dust collection adapter that can efficiently collect dust in gas with a simple configuration without causing pressure loss.

Hereinafter, an embodiment will be described in detail with reference to the drawings. However, more detailed description than necessary may be omitted. For example, detailed description of well-known matters or redundant description of substantially identical configurations may be omitted.

The accompanying drawings and the following description are provided to enable those skilled in the art to fully understand the present disclosure, and are not intended to limit the subject matter recited in the claims.

### (First embodiment)

A first embodiment will be described below with reference to the drawings.

### [1-1. Configuration]

### [1-1-1. Configuration of Gas Meter]

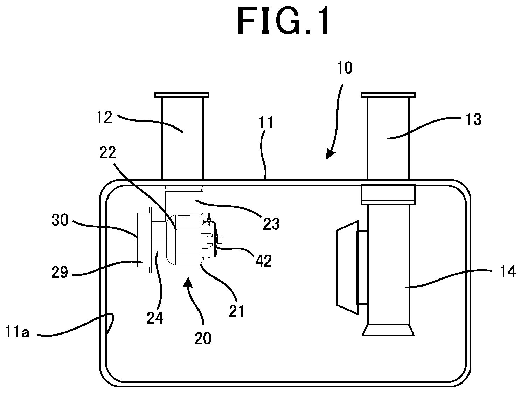

Fig. 1 is a schematic diagram showing a gas meter incorporating a dust collection adapter according to the first embodiment.

As shown in Fig. 1, a gas meter 10 includes a housing 11 having a substantially box shape.

A gas inlet side connecting pipe 12 is provided on one side of the upper portion of housing 11, allowing gas to flow into the housing 11. A gas outlet side connecting pipe 13 is provided on the other side of the upper portion of housing 11, allowing gas that has flowed into the housing 11 to flow out.

A gas pipe (not shown) is connected to each of the gas inlet side connecting pipe 12 and the gas outlet side connecting pipe 13.

A dust collection adapter 20 connected to the gas inlet side connecting pipe 12 is attached inside the housing 11.

A flow rate measurement unit 14 is attached inside the housing 11. The flow rate measurement unit 14 is disposed to extend in the up-down direction. The upper end of the flow rate measurement unit 14 is connected to the gas outlet side connecting pipe 13, and the lower end is open to the interior of the housing 11.

The flow rate measurement unit 14 houses, for example, an ultrasonic measuring instrument (not shown), and is configured to measure the gas flow rate when the gas inside the housing 11 flows toward the gas outlet side connecting pipe 13.

### [1-1-2. Configuration of Dust Collection Adapter]

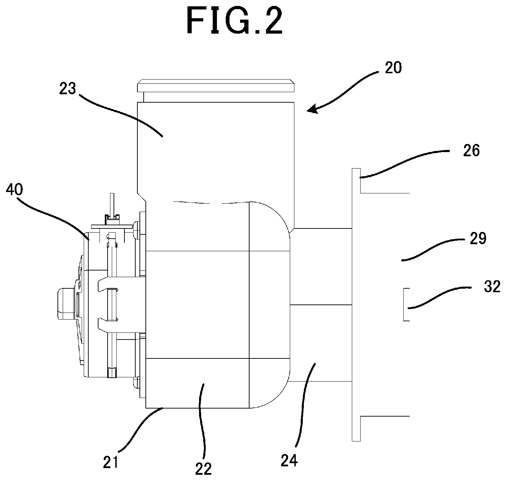

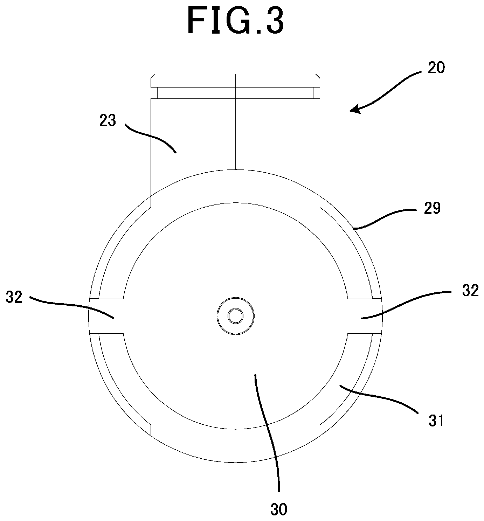

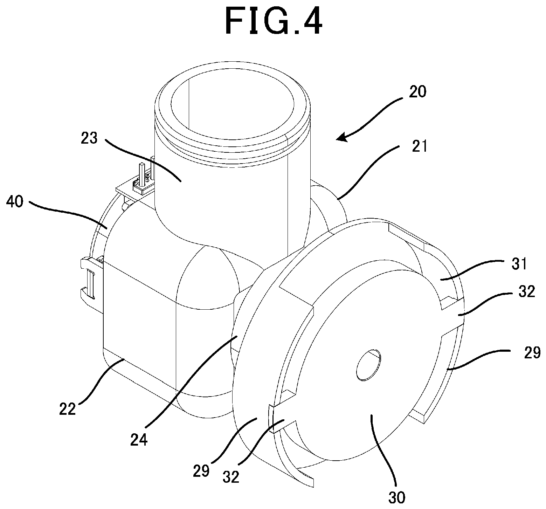

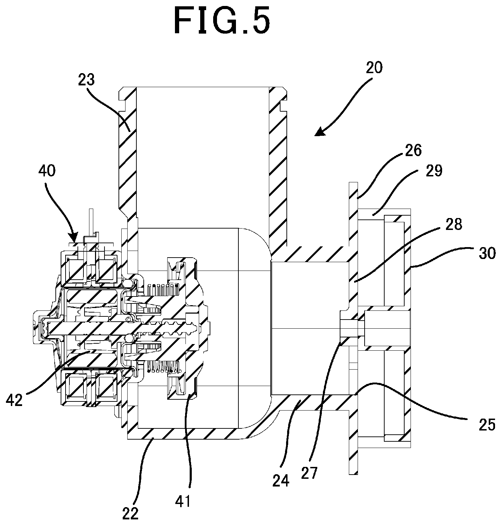

Fig. 2 is a front view showing the dust collection adapter in the first embodiment. Fig. 3 is a side view of the dust collection adapter in the first embodiment. Fig. 4 is a perspective view of the dust collection adapter in the first embodiment. Fig. 5 is a vertical cross-sectional view of the dust collection adapter in the first embodiment.

As shown in Figs. 2 to 5, the dust collection adapter 20 according to the first embodiment includes a shut-off valve mounting joint 21.

The shut-off valve mounting joint 21 includes a substantially box-shaped joint body 22, an inflow portion 23 that protrudes from the upper surface side of the joint body 22 and is connected to the gas inlet side connecting pipe 12 from the inside of the housing 11, and an outflow portion 24 that protrudes in a direction substantially orthogonal to the axial direction of the inflow portion 23 (in this embodiment, toward the side surface 11a, which is one surface of the housing 11).

An outlet opening 25 is formed in the outflow portion 24.

As shown in Fig. 5, a circular mounting portion 27 is provided in the center of the outlet opening 25, and the mounting portion 27 is supported by three support members 28 extending radially.

A substantially circular support plate 26 extending radially from the outlet opening 25 is provided on the outer periphery of the outlet opening 25. A pair of shielding plates 29 are respectively provided on both substantially horizontal sides of the support plate 26, the shielding plates 29 protruding from the end edges of the support plate 26 in substantially orthogonal directions to the support plate 26 toward the side surface 11a of the housing 11. The shielding plates 29 are formed in an arc shape along the outer peripheral edge of the support plate 26 and are configured to shield part of the radial direction of the support plate 26.

The circumferential length of the shielding plates 29 can be set as appropriate. The positions of the shielding plates 29 are not limited to being provided substantially horizontally as in this embodiment, but can be provided at any positions on the support plate 26. The number of shielding plates 29 can also be optional.

A substantially circular collision wall 30 is provided at the outlet opening 25 so as to be substantially parallel to the outlet opening 25. The collision wall 30 is fixed to the mounting portion 27 of the outlet opening 25. As a result, the centers of the outlet opening 25 and the collision wall 30 are coaxially positioned.

Furthermore, the collision wall 30 is disposed substantially parallel to the side surface 11a of the housing 11, and is disposed at a position with a predetermined gap from the side surface 11a of the housing 11.

The collision wall 30 has an outer diameter that is larger than the inner diameter of the outlet opening 25 and smaller than the outer shape of the support plate 26. In other words, the part between the outer periphery of the collision wall 30 and the inside of the shielding plates 29 makes an outflow opening 31 formed by small gaps.

The collision wall 30 is provided with protrusions 32 that are respectively fixed to the shielding plates 29 at locations where the collision wall 30 faces the shielding plates 29. As a result, the collision wall 30 can be supported by the mounting portion 27 and the shielding plates 29, making it possible to support the collision wall 30 more firmly.

The gas flowing out from the outlet opening 25 then collides with the collision wall 30, moves along the collision wall 30 to the outer periphery of the collision wall 30, and is released into the interior of the housing 11 through the gaps between the shielding plates 29 and the collision wall 30.

In this case, some of the dust mixed in the gas falls downward when it collides with the collision wall 30 and accumulates on the interior bottom surface of the housing 11.

Meanwhile, dust that has not fallen after colliding with the collision wall 30 is released into the interior of the housing 11 together with the gas from the gaps between the shielding plates 29 and the collision wall 30. However, when released into the interior of the housing 11, the dust collides with the side surface 11a of the housing 11, so that the remaining dust also accumulates on the interior bottom surface of the housing 11.

In this way, the dust contained in the gas collides with two points, the collision wall 30 and the side surface 11a of the housing 11, so that the dust can be collected efficiently.

Note that the collision wall 30 is positioned at a predetermined gap from the side surface 11a of the housing 11, but the gap between the collision wall 30 and the side surface 11a of the housing 11 can be set freely. In this case, the smaller the gap between the collision wall 30 and the side surface 11a of the housing 11, the faster the speed at which dust collides with the side surface 11a, thereby increasing the dust collection efficiency. Contrarily, the larger the gap between the collision wall 30 and the side surface 11a of the housing 11, the slower the speed at which dust collides with the side surface 11a, thereby reducing the dust collection efficiency and increasing the risk of dust dispersing inside the housing 11. For this reason, it is preferable not to make the gap between the collision wall 30 and the side surface 11a of the housing 11 too large.

A shut-off valve 40 is housed inside the joint body 22. The shut-off valve 40 includes, for example, a valve body 41 for closing the opening of the outflow portion 24 and a plunger mechanism 42 for driving the valve body 41 forward and backward.

During normal use of the gas meter 10, the valve body 41 of the shut-off valve 40 is held in a retracted position. In this state, gas flowing into the joint body 22 from the gas inlet side connection portion via the inflow portion 23 flows out from the outflow portion 24.

The plunger mechanism 42 is then operated to protrude the valve body 41, so that the valve body 41 can close the outflow portion 24. This blocks the flow of gas from the outflow portion 24.

### [1-2. Action]

Next, the action of the dust collection adapter 20 according to the first embodiment will be described.

As shown in Fig. 3, during normal use of the gas meter 10, the valve body 41 of the shut-off valve 40 is held in a retracted position. In this state, gas flowing into the joint body 22 from the gas inlet side connection portion via the inflow portion 23 flows out from the outflow portion 24 into the interior of the housing 11.

The gas flowing out from the outlet opening 25 then collides with the collision wall 30, moves along the collision wall 30 to the outer periphery of the collision wall 30, and is released into the interior of the housing 11 from the outflow opening 31 between the shielding plates 29 and the collision wall 30.

In this case, some of the dust mixed in the gas falls downward when it collides with the collision wall 30 and accumulates on the interior bottom surface of the housing 11.

The gas flowing in from the gas inlet side connection portion passes through the inflow portion 23, the joint body 22, the outflow portion 24, the outlet opening 25, and collides with the collision wall 30, without passing through small holes as in the conventional art. This allows for a significant reduction in pressure loss when gas flows.

Meanwhile, dust that has not fallen after colliding with the collision wall 30 is released into the interior of the housing 11 together with the gas from the outflow opening 31 between the shielding plates 29 and the collision wall 30. However, when released into the interior of the housing 11, the dust collides with the side surface 11a of the housing 11, so that the remaining dust also accumulates on the interior bottom surface of the housing 11.

In this way, the dust contained in the gas collides with two points, the collision wall 30 and the side surface 11a of the housing 11, so that dust can be efficiently collected.

The gas from which the dust has fallen is sent into the interior of the housing 11 and is sent from the lower end of the flow rate measurement unit 14 to the interior of the flow rate measurement unit 14.

The gas flow rate is measured by a sensor inside the flow rate measurement unit 14, and the gas is then sent to the predetermined gas usage location via the gas outlet side connecting pipe 13.

### [1-3. Effects, etc.]

As described above, the dust collection adapter 20 in the first embodiment includes the shut-off valve mounting joint 21, one end of which is connected to the inlet side gas passage, an outlet opening 25 provided at the other end of the shut-off valve mounting joint 21 and opening to the interior of the housing 11, and a collision wall 30 facing the outlet opening 25.

As a result, when gas flows into the shut-off valve mounting joint 21 and flows out through the outlet opening 25, it collides with the collision wall 30, causing dust mixed in the gas to fall downward and accumulate on the interior bottom surface of the housing 11. As a result, dust in the gas can be collected inside the housing 11 with a simple configuration.

In addition, in the dust collection adapter 20 in the first embodiment, the outer shape of the collision wall 30 is formed to be larger than the inner shape of the outlet opening 25, and the outlet opening 25 overlaps with the collision wall 30 when viewed from the axial direction of the outlet opening 25.

As a result, all gas having flowed out from the outlet opening 25 collides with the collision wall 30, allowing dust mixed in the gas to fall downward efficiently.

Furthermore, in the dust collection adapter 20 in the first embodiment, the support plate 26 is provided on the outside of the outlet opening 25, and an outflow opening 31 is provided between the support plate 26 and the collision wall 30.

As a result, gas having flowed out from the outlet opening 25 and collided with the collision wall 30 is allowed to flow out to the interior of the housing 11 from the outflow opening 31 between the support plate 26 and the collision wall 30.

Furthermore, in the dust collection adapter 20 in the first embodiment, the outflow opening 31 faces the side surface 11a (one surface) of the housing 11, and the outflow opening 31 is positioned with a predetermined gap between it and the one surface of the housing 11.

As a result, gas having flowed out from the outflow opening 31 is allowed to flow out toward the side surface 11a of the housing 11. This causes gas from the outflow opening 31 to collide with the side surface 11a of the housing 11 to enable the dust to fall that has failed to fall by the collision with the collision wall 30, allowing for efficient dust collection.

Furthermore, in the dust collection adapter 20 in the first embodiment, the shielding plates 29 are provided on the outer side of the support plate 26, the shielding plates 29 protruding in a direction substantially orthogonal to the support plate 26 and shielding part of the outflow opening 31 in the radial direction.

This allows the shielding plate 29 to prevent gas flowing out from the outflow opening 31 from flowing in the radial direction of the support plate 26, allowing the gas to flow toward one surface of the housing 11. This causes gas from the outflow opening 31 to collide with one surface of the housing 11 to enable the dust to fall that has failed to fall by the collision with the collision wall 30, allowing for efficient dust collection.

### (Other embodiments)

The first embodiment has been described as an example of the technique disclosed in the present application. However, the technique in the present disclosure is not limited to this and can be applied to embodiments with modifications, substitutions, additions, omissions, and the like.

### [Supplementary Notes]

The above description of the embodiments discloses the following techniques.

(Technique 1)A dust collection adapter, disposed inside a gas meter housing, for collecting dust in gas, the dust collection adapter including: a shut-off valve mounting joint having one end connected to an inlet side gas passage; an outlet opening provided at another end of the shut-off valve mounting joint and opening to an interior of the housing; and a collision wall facing the outlet opening.

With this configuration, gas that having flowed into the shut-off valve mounting joint collides with the collision wall when it flows out through the outlet opening, causing dust mixed in the gas to fall downward and accumulate on the interior bottom surface of the housing. As a result, dust contained in the gas can be collected inside the housing with a simple configuration.

(Technique 2)The dust collection adapter according to Technique 1, in which an outer shape of the collision wall is larger than an inner shape of the outlet opening, and the outlet opening overlaps with the collision wall when viewed in an axial direction of the outlet opening.

With this configuration, all gas having flowed out from the outlet opening collides with the collision wall, allowing dust mixed in the gas to fall downward efficiently.

(Technique 3)The dust collection adapter according to Technique 1 or 2, in which a support plate is provided outside the outlet opening, and an outflow opening is provided between the support plate and the collision wall.

With this configuration, gas having flowed out from the outlet opening and collided with the collision wall is allowed to flow out into the interior of the housing through the outflow opening between the support plate and the collision wall.

(Technique 4)The dust collection adapter according to Technique 3, in which the outflow opening faces one surface of the housing, and the outflow opening is positioned with a predetermined gap between the outflow opening and the one surface of the housing.

This configuration allows the gas having flowed out from the outflow opening to flow toward one surface of the housing. This causes gas from the outflow opening to collide with one surface of the housing to enable the dust to fall that have failed to fall by collision with the collision wall, allowing for efficient dust collection.

(Technique 5)The dust collection adapter according to Technique 3 or 4, in which a shielding plate is provided on an outer side of the support plate, the shielding plate protruding in a direction substantially orthogonal to the support plate and shielding part of the outflow opening in a radial direction.

With this configuration, the shielding plate can prevent the gas flowing out from the outflow opening from flowing in the radial direction of the support plate, allowing the gas to flow toward one surface of the housing. This causes gas from the outflow opening to collide with one surface of the housing to enable the dust to fall that have failed to fall by collision with the collision wall, allowing for efficient dust collection.

### Industrial Applicability

The present disclosure can be widely and suitably used in the field of gas meters that measure gas flow rates. This is particularly suitable for use in a case where the gas, which is a fluid to be measured by the gas meter, may contain dust.

### Reference Signs List

- 10: gas meter
- 11: housing
- 11a: side surface
- 12: gas inlet side connecting pipe
- 13: gas outlet side connecting pipe
- 14: flow rate measurement unit
- 20: dust collection adapter
- 21: shut-off valve mounting joint
- 22: joint body
- 23: inflow portion
- 24: outflow portion
- 25: outlet opening
- 26: support plate
- 27: mounting portion
- 28: support member
- 29: shielding plate
- 30: collision wall
- 31: outflow opening
- 32: protrusion
- 40: shut-off valve
- 41: valve body
- 42: plunger mechanism

## Claims

1. A dust collection adapter, disposed inside a gas meter housing, for collecting dust in gas, the dust collection adapter comprising:
a shut-off valve mounting joint having one end connected to an inlet side gas passage;
an outlet opening provided at another end of the shut-off valve mounting joint and opening to an interior of the housing; and
a collision wall facing the outlet opening.

2. The dust collection adapter according to claim 1, wherein
an outer shape of the collision wall is larger than an inner shape of the outlet opening, and
the outlet opening overlaps with the collision wall when viewed in an axial direction of the outlet opening.

3. The dust collection adapter according to claim 1, wherein
a support plate is provided outside the outlet opening, and
an outflow opening is provided between the support plate and the collision wall.

4. The dust collection adapter according to claim 3, wherein
the outflow opening faces one surface of the housing, and
the outflow opening is positioned with a predetermined gap between the outflow opening and the one surface of the housing.

5. The dust collection adapter according to claim 3, wherein
a shielding plate is provided on an outer side of the support plate, the shielding plate protruding in a direction substantially orthogonal to the support plate and shielding part of the outflow opening in a radial direction.
